(19) Europäisches Patentamt / European Patent Office / Office européen des brevets

(11) **EP 3 391 951 A1**

(12) **EUROPÄISCHE PATENTANMELDUNG**

(43) Veröffentlichungstag:
**24.10.2018 Patentblatt 2018/43**

(21) Anmeldenummer: **18168382.2**

(22) Anmeldetag: **20.04.2018**

(51) Int Cl.:
*B01D 39/16* (2006.01)　　　*B01D 39/08* (2006.01)
*C02F 1/00* (2006.01)　　　*C02F 1/28* (2006.01)
*C02F 1/42* (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **21.04.2017 DE 102017206734**

(71) Anmelder: **Orben Wasseraufbereitung GmbH & Co. KG**
**65203 Wiesbaden (DE)**

(72) Erfinder: **ORBEN, Steffen**
**61476 Kronberg (DE)**

(74) Vertreter: **Mehler Achler**
**Patentanwälte Partnerschaft mbB**
**Bahnhofstraße 67**
**65185 Wiesbaden (DE)**

(54) **FILTEREINSATZ FÜR EINE WASSERBEHANDLUNGSVORRICHTUNG, EINE WASSERBEHANDLUNGSVORRICHTUNG SOWIE VERWENDUNG EINES FLÄCHENGEBILDES**

(57)　Die vorliegende Erfindung betrifft einen Filtereinsatz (10) für eine Wasserbehandlungsvorrichtung mit einer Wandung (20), die aus mindestens einem wasserdurchlässigen Flächengebilde (12) gefertigt ist, wobei die Wandung (20) ein Innenvolumen V begrenzt, in dem ein Wasserbehandlungsmittel angeordnet ist. Um die Effektivität von Wasserbehandlungsvorrichtungen zu verbessern ist vorgesehen, dass das Flächengebilde (12) eine Reißdehnung $\varepsilon_R < 100\%$ aufweist.

Fig. 1

**Beschreibung**

Die vorliegende Erfindung betrifft einen Filtereinsatz für eine Wasserbehandlungsvorrichtung, eine Wasserbehandlungsvorrichtung sowie die Verwendung eines Flächengebildes.

Wasserbehandlungsvorrichtungen werden insbesondere zum Reinigen oder Filtrieren von Wasser verwendet. Unter dem Reinigen oder Filtrieren von Wasser wird insbesondere das Entkalken, das Entsalzen von Wasser sowie das Einstellen eines bestimmten pH-Werts verstanden. In vielen Fällen soll dabei vollentsalztes Wasser (VE-Wasser) bereitgestellt werden. VE-Wasser kommt unter anderem in Heizungsanlagen, in chemischen oder pharmazeutischen Labors sowie als Reinigungsmedium, beispielsweise bei der Fassaden- oder Fensterreinigung, zum Einsatz.

Bei der Wasserbehandlung kann eine Vielzahl von Wasserbehandlungsmitteln zum Einsatz kommen. Hierzu zählen insbesondere verschiedene Harze, die in Form von Schüttgut als Filtermittel verwendet werden. Ein Beispiel für ein solches Wasserbehandlungsmittel ist das Ionenaustauschermischbett Ionac© NM 60 des Herstellers Lanxess. Das zu behandelnde Wasser strömt durch das Wasserbehandlungsmittel und wird dabei behandelt und insbesondere gereinigt oder filtriert.

Gattungsgemäße Wasserbehandlungsvorrichtungen weisen oftmals ein Gehäuse auf, in dem das Wasserbehandlungsmittel angeordnet wird. Das Gehäuse weist einen Zulauf und einen Ablauf auf, die z.B. bezüglich des Gehäuses gegenüberliegend angeordnet sind, sodass ein Wasserstrom durch das Wasserbehandlungsmittel erzeugt wird.

Mit der Zeit wird das Wasserbehandlungsmittel verbraucht, sodass nach einer bestimmten Lebensdauer ein Austausch des Wasserbehandlungsmittels notwendig ist. Das Gesamtvolumen des Wasserbehandlungsmittels nimmt während der Lebensdauer ab, beispielsweise um bis zu 20% im Falle des Ionac© NM 60.

Da die Handhabung von Schüttgut in der Praxis aufwendig und zeitintensiv ist, gibt es bereits Wasserbehandlungsvorrichtungen, bei denen das Wasserbehandlungsmittel in Beuteln vorgehalten wird. Das Wasserbehandlungsmittel wird gemeinsam mit dem Beutel in die Wasserbehandlungsvorrichtung eingesetzt, wobei der Beutel wasserdurchlässig ist, sodass das Wasser durch die Wandung des Beutels strömen kann. Entsprechende Vorrichtungen sind beispielsweise aus der DE 10 2015 007 200 U1 sowie der US 2,278,488 bekannt.

In der US 2,278,488 besteht der Beutel für das Wasserbehandlungsmittel aus einem flexiblen Gewebe, das sich aufgrund des enthaltenen Wasserbehandlungsmittels ausdehnen und an die Innenfläche des Gehäuses anpassen soll.

Der Beutel der DE 10 2015 007 200 U1 soll aus einem Elastomermaterial bestehen, wobei konkret Materialien aus 5-15% Elastan und 95-85% Nylon genannt sind. Der Beutel soll mittels Stricken oder Weben hergestellt werden. Ziel ist es auch hier, ein Anschmiegen des Beutels an die Innenfläche des Gehäuses zu bewirken. Auf diese Weise soll vermieden werden, dass Wasser außen an dem Beutel entlang fließt und dadurch unbehandelt das Gehäuse verlässt. Ein sehr ähnlicher Beutel ist auch aus der DE 32 07 511 A1 bekannt.

Durch die aus dem Stand der Technik bekannten Beutel wird die Handhabung des Wasserbehandlungsmittels verbessert und dessen Austausch vereinfacht.

Es hat sich jedoch herausgestellt, dass insbesondere bei dem Einsetzen und Herausnehmen der Beutel sowie bei der sonstigen Handhabung ein Teil des Wasserbehandlungsmittels verloren geht, da insbesondere im trockenen Zustand einzelne Partikel durch das Material der Beutel austreten. Dieser Effekt tritt insbesondere dann auf, wenn die Partikel des Wasserbehandlungsmittels trocken und/oder durch Abrieb zerkleinert sind. Dadurch wird die Effektivität der Wasserbehandlungsvorrichtung verringert.

Es ist daher Aufgabe der Erfindung, die Effektivität von Wasserbehandlungsvorrichtungen zu verbessern.

Diese Aufgabe wird durch einen Filtereinsatz gemäß Anspruch 1, eine Wasserbehandlungsvorrichtung gemäß Anspruch 18 sowie die Verwendung eines Flächengebildes gemäß Anspruch 20 gelöst.

Der erfindungsgemäße Filtereinsatz für eine Wasserbehandlungsvorrichtung weist eine Wandung auf, die aus mindestens einem wasserdurchlässigen Flächengebilde gefertigt ist. Die Wandung begrenzt ein Innenvolumen, in dem ein Wasserbehandlungsmittel angeordnet ist. Der Filtereinsatz ist dadurch gekennzeichnet, dass das Flächengebilde eine Reißdehnung $\varepsilon_R$ < 100% aufweist.

Besonders bevorzugt weisen alle Flächengebilde der Wandung eine Reißdehnung $\varepsilon_R$ < 100% auf.

Es hat sich gezeigt, dass durch die Verwendung eines Flächengebildes mit einer Reißdehnung $\varepsilon_R$ < 100% der Verlust des Wasserbehandlungsmittels begrenzt werden kann. Gattungsgemäße Filtereinsätze verwenden elastische und/oder flexible Flächengebilde, wobei sich "elastisch" auf den jeweiligen Werkstoff (beispielsweise Elastan) und "flexibel" auf die durch die Verarbeitung (beispielsweise als Gewebe) erzielte Nachgiebigkeit des Flächengebildes beziehen. Bestehende Öffnungen in dem Flächengebilde bekannter Filtereinsätze vergrößern sich bei der Handhabung der Filtereinsätze aufgrund der Elastizität und/oder Flexibilität des jeweiligen Flächengebildes. Dadurch können Partikel des Wasserbehandlungsmittels aus dem Filtereinsatz austreten, gehen somit verloren und gelangen in die Umwelt, aus der sie gegebenenfalls entfernt werden müssen.

Die Reißdehnung wird gemäß DIN EN ISO 13934-1 ermittelt. Hierzu wird eine Probe mit einer Länge $L_0$ = 20 cm und einer Breite B = 5 cm bei Normalbedingungen in eine Zugprüfmaschine eingespannt und durch eine Zugkraft bis zum Riss (auch Bruch genannt) belastet. Im Moment des Bruchs weist die Probe eine Länge $L_B$ auf und wird mit einer Bruchkraft $F_B$ belastet. Die Reißdehnung $\varepsilon_R$ wird wie folgt berechnet:

$$\varepsilon_R = \frac{L_B - L_0}{L_0} \bullet 100\%$$

Bevorzugt beträgt die Reißdehnung $\varepsilon_R$ < 70% und besonders bevorzugt beträgt die Reißdehnung $\varepsilon_R$ < 50%. Je kleiner die Reißdehnung, umso weniger stark vergrößern sich in dem Flächengebilde vorhandene Öffnungen und umso stärker wird der Verlust des Wasserbehandlungsmittels reduziert.

Vorteilhafterweise besteht das Flächengebilde zumindest teilweise aus einem Kunststoffmaterial, insbesondere zumindest teilweise aus einem thermoplastischen Kunststoff. Besonders bevorzugt besteht das Flächengebilde vollständig aus einem Kunststoffmaterial, insbesondere einem thermoplastischen Kunststoffmaterial. Kunststoffmaterialien sind für die Herstellung von Flächengebilden mit einer Reißdehnung $\varepsilon_R$ < 100% sehr geeignet, da sie gut verarbeitbar und kostengünstig sind. Zudem sind sie gegenüber dem Kontakt mit Wasser unempfindlich und eignen sich damit besonders für das Reinigen und/oder Filtrieren von Wasser.

Besonders bevorzugt besteht das Flächengebilde zumindest teilweise aus Acrylnitril-Butadien-Styrol (ABS), Polyamid (PA), Polylactat (PLA), Polymethylmethacrylat (PMMA), Polycarbonat (PC), Polyethylenterephthalat (PET), Polyethylen (PE), Polypropylen (PP), Polystyrol (PS), Polyetheretherketon (PEEK), Polyvinylchlorid (PVC).

Bei vorteilhaften Weiterbildungen ist vorgesehen, dass das Flächengebilde einteilig ist. Auf diese Weise ist das Flächengebilde formstabil und es kommt zu keiner starken Aufweitung vorhandener Öffnungen in dem Flächengebilde.

Bevorzugt weist das Flächengebilde eine gitterartige Struktur auf. Dadurch können die Öffnungen in dem Flächengebilde gleichmäßig verteilt werden, sodass eine gleichmäßige Durchströmung ermöglicht wird.

Vorteilhafterweise ist das Flächengebilde mittels Extrusion hergestellt. Durch diese Art der Herstellung kann das Flächengebilde unmittelbar (ohne zusätzliche Verfahrensschritte) einteilig hergestellt werden, was die Herstellung vereinfacht und damit auch Kostenvorteile mit sich bringt.

Bei vorteilhaften Weiterbildungen ist das Flächengebilde aus einer Mehrzahl von Fäden gebildet. Dies erhöht die Variabilität bei der weiteren Verarbeitung und ermöglicht eine Vielzahl von unterschiedlich ausgebildeten Flächengebilden. Bevorzugt sind die Fäden des Flächengebildes mittels einer Wärmebehandlung aneinander fixiert. Auf diese Weise wird dem Flächengebilde ein Teil seiner Flexibilität genommen, da sich die Fäden nicht relativ zueinander bewegen können. Dadurch kann eine geringe Reißdehnung erreicht werden.

Vorteilhafterweise ist das Flächengebilde ein Gelege oder Gewebe oder Gewirk oder Geflecht oder Gestrick. Im Gegensatz zu Flächengebilden auf Faserbasis, wie beispielsweise Vlies oder Filz, kann durch ein Gelege, Gewebe, Gewirk, Geflecht oder Gestrick eine kontrollierte Maschenweite für das Flächengebilde eingestellt werden. Die Maschenweite ist einerseits für eine gleichmäßige und kontrollierte Strömung des zu reinigenden Wassers und andererseits für die Zurückhaltung der Partikel des Wasserbehandlungsmittels von großer Bedeutung.

Bevorzugt weist das Flächengebilde eine Maschenweite zwischen 100 $\mu$m und 1000 $\mu$m auf. Diese Maschenweiten eignen sich besonders für die Verwendung von Ionenaustauscherharzen. Die Maschenweite beträgt bevorzugt zwischen 100 $\mu$m und 500 $\mu$m und besonders bevorzugt zwischen 100 $\mu$m und 300 $\mu$m. Flächengebilde können in unterschiedlichen Richtungen innerhalb des Flächengebildes unterschiedliche Maschenweiten aufweisen. Insbesondere kann beispielsweise ein Gewebe in Kettrichtung eine erste Maschenweite und in Schussrichtung eine von der ersten abweichende zweite Maschenweite aufweisen. Bevorzugt sind in solchen Fällen alle Maschenweiten des Flächengebildes innerhalb der oben angegebenen Grenzen.

Die Maschenweite sollte für eine Optimierung des Durchflusses so groß wie möglich, aber so klein wie nötig sein, um den Verlust von Wasserbehandlungsmittel zu minimieren.

Vorteilhafterweise weist das Flächengebilde eine Materialdicke zwischen 100 $\mu$m und 500 $\mu$m auf. Flächengebilde dieser Materialdicken sind ausreichend robust für die Handhabung der Filtereinsätze und gleichzeitig weniger materialintensiv als dickere Materialien. Bevorzugt beträgt die Materialdicke zwischen 100 $\mu$m und 300 $\mu$m.

Damit der Filtereinsatz eine ausreichende Lebensdauer besitzt, weist das Flächengebilde bevorzugt eine Reißfestigkeit $\rho_R$ > 200 N / 5 cm auf. Bevorzugt ist die Reißfestigkeit $\rho_R$ > 400 N / 5 cm, besonders bevorzugt ist die Reißfestigkeit $\rho_R$ > 500 N / 5 cm Die Reißfestigkeit wird anhand der Breite B der Probe (5 cm) und der Zugkraft $F_B$, mit der die Probe bei der Prüfung gemäß DIN EN ISO 13934-1 im Moment des Bruchs belastet ist, berechnet. Es gilt:

$$\rho_R = \frac{F_B}{B}$$

Zur Optimierung der Durchflussmenge durch den Filtereinsatz ist vorteilhafterweise vorgesehen, dass das Flächengebilde eine Siebfläche S > 30% aufweist. Bevorzugt ist die Siebfläche S > 40%. Die Siebfläche S entspricht der Summe der Flächen der Öffnungen in dem Flächengebilde in Relation zu der Gesamtfläche des Flächengebildes.

Unter der Wandung wird vorzugsweise die Gesamtheit der Teile des Filtereinsatzes verstanden, die den Raum umschließen, in dem das Wasserbehandlungsmittel angeordnet ist. Bevorzugt haben sämtliche Teile der Wandung unmittelbaren Kontakt mit dem Wasserbehandlungsmittel.

Vorteilhafterweise weist der Filtereinsatz einen Henkel oder ein Griffelement auf, wobei der Henkel oder das Griffelement an der Wandung angeordnet ist. Dies erleichtert die Handhabung des Beutels.

Bei vorteilhaften Weiterbildungen weist die Wandung eine Kissenform auf. Die Wandung weist bei dieser Ausführungsform vorzugsweise zwei identische Flächengebilde, insbesondere zwei identische, kreisrunde Flächengebilde auf, die entlang ihres jeweiligen Außenumfangs miteinander verbunden sind. Alternativ weist die Wandung ein spiegelsymmetrisches Flächengebilde auf, das im Bereich einer Spiegelebene entlang der Faltkante zusammengefaltet und entlang des offenen Außenumfangs verschlossen wird. Kissenformen bieten Vorteile hinsichtlich der Herstellung, da weniger Verfahrensschritte zur Herstellung notwendig sind.

Die Wandung kann mehrere Flächengebilde aufweisen.

Bei vorteilhaften Weiterbildungen ist vorgesehen, dass die Wandung eine zylindrische Grundform aufweist. Dadurch ist der Filtereinsatz formstabil, was für die Handhabung und das Einsetzen in ein Gehäuse einer Wasserbehandlungsvorrichtung vorteilhaft ist.

Die Flächengebilde können auf verschiedene Arten miteinander verbunden werden. Vorteilhaft sind insbesondere ein Vernähen und ein Verschweißen. Das Vernähen ist aus technologischer Sicht wenig aufwendig, führt jedoch zu Überlappungen, in denen die Wandung des Filtereinsatzes unnötig dick ist. Das Verschweißen ist aufwendiger, verringert jedoch die Anzahl der Überlappungen.

Bei vorteilhaften Weiterbildungen weist die Wandung des Filtereinsatzes eine Öffnung auf, durch die ein Befüllen und ein Entleeren des Filtereinsatzes ermöglicht wird. Ein Entleeren ist beispielsweise für einen Austausch des enthaltenen Wasserbehandlungsmittels erforderlich. Die Wandung ist bevorzugt in einem Endbereich der Wandung angeordnet. Da das Wasserbehandlungsmittel ausgetauscht werden kann, ist der erfindungsgemäße Filtereinsatz wiederverwendbar. Darüber hinaus kann der Filtereinsatz einfacher recycelt werden, da das Wasserbehandlungsmittel auf einfache Weise aus dem Filtereinsatz entfernt werden kann.

Die Öffnung ist bevorzugt mittels eines Verschlusselements verschließbar, um einen Verlust von Wasserbehandlungsmittel durch die Öffnung beim Transport und bei der Handhabung zu vermeiden. Als Verschlusselement kann beispielsweise ein Kabelbinder zum Einsatz kommen. Besonders vorteilhaft ist ein Verschlusselement in Form eines sogenannten Originalitätsverschlusses. Durch einen Originalitätsverschluss kann sichergestellt werden, dass der Hersteller einen Befüllung oder Austausch des Wasserbehandlungsmittels genommen hat.

Bei Wasserbehandlungsvorrichtungen ist insbesondere das Einsetzen und Entnehmen des Filtereinsatzes in ein bzw. aus dem Gehäuse der Wasserbehandlungsvorrichtung von großer Bedeutung für die Handhabung. Bevorzugt ist der Henkel oder das Griffelement daher in einem Endbereich des Filtereinsatzes angeordnet. Im Falle eines zylindrischen Filtereinsatzes ist dies insbesondere der Bereich einer Stirnfläche. Bevorzugt ist der Henkel oder das Griffelement mittels zumindest einer Naht mit der Wandung verbunden.

Bei vorteilhaften Weiterbildungen des Filtereinsatzes weist die Wandung eine Bodenwandung, eine Seitenwandung und eine Deckenwandung auf, wobei der Henkel mit der Seitenwandung verbunden ist und im Bereich der Seitenwandung zumindest teilweise von der Bodenwandung zu der Deckenwandung verläuft. Dadurch trägt der Henkel zur Stabilisierung des Filtereinsatzes bei. Die Strecke von der Bodenwandung zu der Deckenwandung ist die Höhe der Wandung. Bevorzugt verläuft der Henkel zumindest auf der Hälfte dieser Strecke und besonders bevorzugt vollständig von der Bodenwandung zu der Deckenwandung.

Die erfindungsgemäße Wasserbehandlungsvorrichtung weist ein Gehäuse und einen in dem Gehäuse angeordneten Filtereinsatz gemäß den obigen Ausführungen auf. Aufgrund der geringen Reißdehnung der Wandung des Filtereinsatzes besitzt der Filtereinsatz eine verringerte Anpassungsfähigkeit. Bevorzugt sind daher das Gehäuse und der Filtereinsatz hinsichtlich ihrer Form aneinander angepasst. Ein Innenraum des Gehäuses entspricht bevorzugt hinsichtlich seiner Form und Größe der Wandung des Filtereinsatzes.

Bei vorteilhaften Weiterbildungen ist vorgesehen, dass das Gehäuse eine zylindrische Grundform mit einem ersten Durchmesser D1 und die Wandung des Filtereinsatzes eine zylindrische Grundform mit einem zweiten Durchmesser D2 aufweist, wobei D2 > D1 ist. Der Filtereinsatz besitzt dadurch ein Übermaß gegenüber dem Gehäuse, wodurch ein Anschmiegen des Beutels an das Gehäuse erreicht wird. Auf diese Weise wird die durch die geringe Reißdehnung verringerte Anpassungsfähigkeit der Wandung kompensiert.

Erfindungsgemäß wird ein Flächengebilde mit einer Reißdehnung $\varepsilon_R$ < 100% für einen Filtereinsatz einer Wasserbehandlungsvorrichtung verwendet. Aus den vorstehend beschriebenen Gründen ist diese Verwendung vorteilhaft. Das Flächengebilde weist bevorzugt eines oder mehrere der vorstehend beschriebenen weiteren Merkmale auf.

Die Reißdehnung $\varepsilon_R$ kann in verschiedenen Richtungen innerhalb des Flächengebildes unterschiedliche Werte annehmen. Insbesondere können beispielsweise bei einem Gewebe die Reißdehnung in Kettrichtung und die Reißdehnung in Schussrichtung unterschiedlich groß sein. Bevorzugt gelten die erfindungsgemäßen Angaben zu der Reißdehnung für alle Richtungen innerhalb des Flächengebildes, wobei die Reißdehnungen innerhalb eines Flächengebildes voneinander abweichen können.

Die Erfindung wird nachfolgend anhand der Zeichnungen beispielhaft dargestellt und beschrieben. Es zeigt dabei:

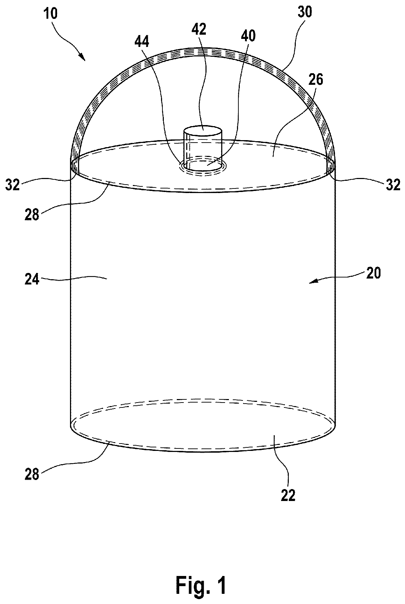

Figur 1     schematisch eine Ausführungsform eines erfindungsgemäßen Filtereinsatzes;

Figur 2     schematisch einen Ausschnitt eines Flächengebildes für einen erfindungsgemäßen Filtereinsatz;

Figur 3     schematisch eine zweite Ausführungsform eines erfindungsgemäßen Filtereinsatzes;

Figur 4     schematisch eine dritte Ausführungsform eines erfindungsgemäßen Filtereinsatzes;

Figur 5     eine Ausführungsform einer Wasserbehandlungsvorrichtung.

Der Filtereinsatz 10 in der Figur weist eine Wandung 20 und einen Henkel 30 auf. Die Wandung 20 ist aus drei Teilen gebildet: einer Bodenwandung 22, einer Seitenwandung 24 und einer Deckenwandung 26. Die Bodenwandung 22 und die Deckenwandung 26 sind jeweils kreisrund, die Seitenwandung 24 weist die Form einer zylindrischen Mantelfläche auf. Die Bodenwandung 22 und die Deckenwandung 26 sind jeweils mit der Seitenwandung 24 durch eine Naht 28 verbunden.

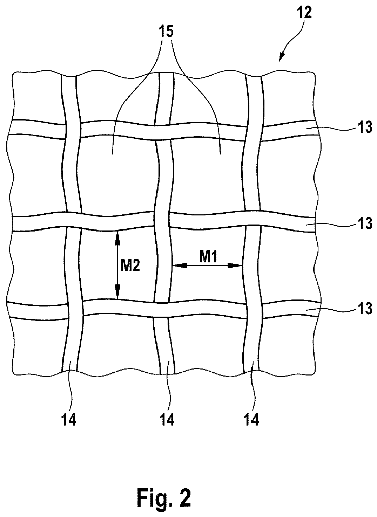

Die Bodenwandung 22, die Seitenwandung 24 und die Deckenwandung 26 sind jeweils aus einem Flächengebilde 12 (siehe auch Figur 2) gefertigt. Bei der vorliegenden Ausführungsform handelt es sich bei dem Flächengebilde 12 um ein PET-Gewebe mit einer Reißdehnung $\varepsilon_R$ < 50%.

Der Henkel 30 ist durch Nähte 32 mit der Deckenwandung 26 verbunden. Der Henkel 30 besteht im Wesentlichen aus einem bandförmigen Flächengebilde 12.

In dem Filtereinsatz 10 ist ein Wasserbehandlungsmittel angeordnet, das nicht dargestellt ist. Um ein Befüllen des Filtereinsatzes 10 mit Wasserbehandlungsmittel und ein Entleeren zu ermöglichen, weist die Deckenwandung 26 eine Öffnung 40 mit einem Stutzen 42 auf. Der Stutzen 42 vereinfacht das Befüllen und kann durch einen Kabelbinder zugeschnürt werden. Auf diese Weise kann der Filtereinsatz 10 verschlossen werden. Der Stutzen 42 ist ebenfalls aus einem Flächengebilde 12 gefertigt und durch eine Naht 44 mit der Deckenwandung 26 verbunden.

Der Filtereinsatz 10 kann in einem Gehäuse einer Wasserbehandlungsvorrichtung angeordnet werden. Dort wird der Filtereinsatz 10 und das enthaltene Wasserbehandlungsmittel von Wasser durchströmt. Dadurch wird das Wasser gereinigt.

In Figur 2 ist ein Flächengebilde 12 dargestellt, das zur Herstellung der Wandung 20 des Filtereinsatzes 10 verwendet werden kann. Das Flächengebilde 12 ist ein Gewebe, in dem Kettfäden 13 und Schussfäden 14 miteinander verwoben sind. Sämtliche Kettfäden 13 und sämtliche Schussfäden 14 sind jeweils parallel angeordnet. Die Kettfäden 13 sind in einem 90°-Winkel zu den Schussfäden 14 angeordnet.

Die Kettfäden 13 und die Schussfäden 14 bilden im Wesentlichen rechteckige Öffnungen 15, durch die Wasser fließen kann. Die Öffnungen 15 weisen in einer Richtung parallel zu den Kettfäden 13 eine erste Maschenweite M1 und in einer Richtung parallel zu den Schussfäden 14 eine zweite Maschenweite M2 auf. Die Maschenweite M1 entspricht dem Abstand der einzelnen Schussfäden 14 zueinander und die Maschenweite M2 entspricht dem Abstand der einzelnen Kettfäden 13 zueinander. Die Maschenweiten M1, M2 werden so gewählt, dass Partikel des bei bestimmungsgemäßem Gebrauch in dem Filtereinsatz 10 angeordneten Wasserbehandlungsmittels zurückgehalten werden.

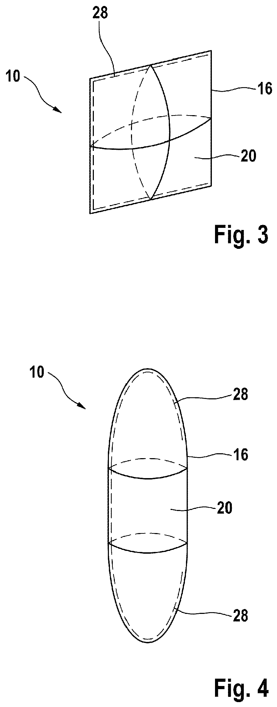

Figur 3 zeigt eine weitere Ausführungsform eines Filtereinsatzes 10. Der Filtereinsatz 10 weist eine Wandung 20 auf, in der ein nicht dargestelltes Wasserbehandlungsmittel angeordnet ist. Die Wandung 20 weist ein spiegelsymmetrisches Flächengebilde 12 auf, das entlang einer Faltkante 16 zusammengefaltet ist. Das Flächengebilde 12 weist bei dieser Ausführungsform eine rechteckige Grundform auf. Entlang des Außenumfangs mit Ausnahme der Faltkante 16 ist das Flächengebilde 12 mittels einer Naht 28 verschlossen, wodurch die Wandung 20 ein Innenvolumen begrenzt. Auf diese Weise erhält die Wandung 20 eine Kissenform.

Figur 4 zeigt eine weitere Ausführungsform eines erfindungsgemäßen Filtereinsatzes 10. Der Filtereinsatz 10 weist eine schlauchförmige Wandung 20 auf. Die Wandung 20 ist einteilig und besteht aus einem Flächengebilde, das entlang einer Faltkante 16 zusammengefaltet und entlang einer Naht 28 verschlossen ist. Die Schlauchform ist eine Sonderform der Kissenform. Durch die Schlauchform kann sich der Filtereinsatz 10 besser an ein Gehäuse einer Wasserbehandlungsvorrichtung anpassen.

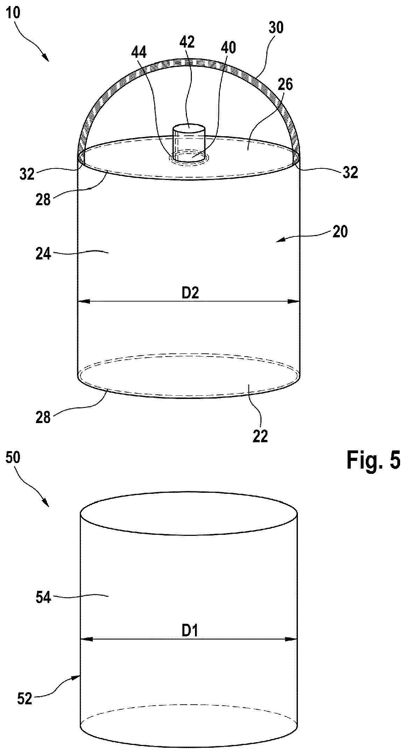

In Figur 5 ist eine Wasserbehandlungsvorrichtung 50 dargestellt. Die Wasserbehandlungsvorrichtung 50 weist ein Gehäuse 52 auf. Das Gehäuse 52 weist eine zylindrische Grundform mit einer Außenwandung 54 mit einem Durchmesser D1 auf.

In das Gehäuse 52 wird ein Filtereinsatz 10 eingesetzt. Der Filtereinsatz 10 weist eine zylindrische Wandung 20 mit einem Durchmesser D2 auf. Der Durchmesser D2 ist geringfügig größer als der Durchmesser D1, so dass die Seitenwandung 24 der Wandung 20 an der Außenwandung 54 des Gehäuses 52 anliegt, wenn der Filtereinsatz 10 eingesetzt ist.

Nicht dargestellt sind ein Boden und ein Deckel des Gehäuses, die einen Einlass für das zu reinigende Medium und einen Auslass für gereinigtes Medium aufweisen.

**Bezugszeichenliste**

10   Filtereinsatz
12   Flächengebilde
13   Kettfaden
14   Schussfaden
15   Öffnung
16   Faltkante

20   Wandung
22   Bodenwandung
24   Seitenwandung
26   Deckenwandung
28   Naht

30   Henkel
32   Naht

40   Öffnung
42   Stutzen
44   Naht

50   Wasserbehandlungsvorrichtung
52   Gehäuse
54   Außenwandung

D1   Durchmesser des Gehäuses 52
D2   Durchmesser der Wandung 20

M1   erste Maschenweite
M2   zweite Maschenweite

**Patentansprüche**

1.  Filtereinsatz (10) für eine Wasserbehandlungsvorrichtung mit einer Wandung (20), die aus mindestens einem wasserdurchlässigen Flächengebilde (12) gefertigt ist, wobei die Wandung (20) ein Innenvolumen begrenzt, in dem ein Wasserbehandlungsmittel angeordnet ist, **dadurch gekennzeichnet, dass** das Flächengebilde (12) eine Reißdehnung $\varepsilon_R$ < 100% aufweist.

2.  Filtereinsatz (10) gemäß Anspruch 1, **dadurch gekennzeichnet, dass** das Flächengebilde (12) zumindest teilweise aus einem Kunststoffmaterial besteht.

3.  Filtereinsatz (10) gemäß einem der vorhergehenden Ansprüche, **dadurch gekennzeichnet, dass** das Flächengebilde (12) einteilig ist.

4.  Filtereinsatz (10) gemäß einem der vorhergehenden Ansprüche, **dadurch gekennzeichnet, dass** das Flächengebilde (12) eine gitterartige Struktur aufweist.

5.  Filtereinsatz (10) gemäß einem der vorhergehenden Ansprüche, **dadurch gekennzeichnet, dass** das Flächengebilde (12) aus einer Mehrzahl von Fäden (13, 14) gebildet ist.

6.  Filtereinsatz (10) gemäß Anspruch 5, **dadurch gekennzeichnet, dass** die Fäden (13, 14) des Flächengebildes (12) mittels einer Wärmebehandlung aneinander fixiert sind.

7.  Filtereinsatz (10) gemäß einem der vorhergehenden Ansprüche, **dadurch gekennzeichnet, dass** das Flächengebilde (12) ein Gelege oder Gewebe oder Gewirk oder Geflecht oder Gestrick ist.

8.  Filtereinsatz (10) gemäß einem der vorhergehenden Ansprüche, **dadurch gekennzeichnet, dass** das Flächengebilde (12) eine Reißfestigkeit $\rho_R$ > 200 N/5cm aufweist.

9.  Filtereinsatz (10) gemäß einem der vorhergehenden Ansprüche, **dadurch gekennzeichnet, dass** das Flächengebilde (12) eine Siebfläche S > 30% aufweist.

10. Filtereinsatz (10) gemäß einem der vorhergehenden Ansprüche, **dadurch gekennzeichnet, dass** der Filtereinsatz (10) einen Henkel (30) oder ein Griffelement aufweist, wobei der Henkel (30) oder das Griffelement an der Wandung (20) angeordnet ist.

11. Filtereinsatz (10) gemäß einem der vorherigen Ansprüche, **dadurch gekennzeichnet, dass** die Wandung (20) eine Kissenform aufweist.

12. Filtereinsatz (10) gemäß einem der Ansprüche 1 bis 10, **dadurch gekennzeichnet, dass** die Wandung (20) eine zylindrische Grundform aufweist und die Wandung (20) eine Bodenwandung (22), eine Seitenwandung (24) und eine Deckenwandung (26) aufweist, wobei der Henkel (30) oder das Griffelement mit der Seitenwandung (24) verbunden ist und im Bereich der Seitenwandung (24) zumindest teilweise von der Bodenwandung (22) zu der Deckenwandung (26) verläuft.

13. Wasserbehandlungsvorrichtung (50) mit einem Gehäuse (52) und einem in dem Gehäuse (52) angeordneten Filtereinsatz (10) gemäß einem der vorhergehenden Ansprüche.

14. Wasserbehandlungsvorrichtung gemäß Anspruch 13, **dadurch gekennzeichnet, dass** das Gehäuse (52) eine zylindrische Grundform mit einem ersten Durchmesser D1 und die Wandung (20) des Filtereinsatzes (10) eine zylindrische Grundform mit einem zweiten Durchmesser D2 aufweist, wobei D2 >
D1 ist.

15. Verwendung eines Flächengebildes (12) mit einer
Reißdehnung $\varepsilon_R$ < 100% für einen Filtereinsatz (10)
einer Wasserbehandlungsvorrichtung.

Fig. 1

Fig. 2

**Fig. 3**

**Fig. 4**

Fig. 5

Europäisches
Patentamt

European
Patent Office

Office européen
des brevets

## EUROPÄISCHER RECHERCHENBERICHT

Nummer der Anmeldung

EP 18 16 8382

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X<br><br>Y | JP H07 163820 A (MITSUBISHI RAYON CO)<br>27. Juni 1995 (1995-06-27)<br>* Absätze [0006] - [0010] *<br>----- | 1-3,5,6,<br>11,13,15<br>4,7,10 | INV.<br>B01D39/16<br>B01D39/08<br>C02F1/00<br>C02F1/28 |
| Y | DE 199 62 131 A1 (HAAS RAINER [DE]; OESTE FRANZ DIETRICH [DE])<br>6. September 2001 (2001-09-06)<br>* Absätze [0014], [0015], [0016],<br>[0022], [0023], [0024] *<br>----- | 4,7,10 | C02F1/42 |

RECHERCHIERTE
SACHGEBIETE (IPC)

B01D
C02F

Der vorliegende Recherchenbericht wurde für alle Patentansprüche erstellt

| Recherchenort | Abschlußdatum der Recherche | Prüfer |
|---|---|---|
| München | 23. Mai 2018 | Borello, Ettore |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 18 16 8382

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-05-2018

| Im Recherchenbericht angeführtes Patentdokument | Datum der Veröffentlichung | Mitglied(er) der Patentfamilie | Datum der Veröffentlichung |
|---|---|---|---|
| JP H07163820 A | 27-06-1995 | KEINE | |
| DE 19962131 A1 | 06-09-2001 | KEINE | |

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102015007200 U1
- US 2278488 A
- DE 3207511 A1